# EUROPEAN PATENT APPLICATION

(11) **EP 4 657 615 A1**
(43) Date of publication of application: **03.12.2025**
(21) Application number: 24178640.9
(22) Date of filing: 28.05.2024
(51) Int. Cl.: H01M 50/105, H01M 50/183

(54) **METHOD AND APPARATUS FOR MANUFACTURING AN ELECTRODE ASSEMBLY FOR USE IN A BATTERY**

(71) Applicant: LG Energy Solution, Ltd., Seoul 07335 (KR)
(72) Inventor: CHOI, Jin Hyeong, 34122 Daejeon (KR)
(74) Representative: Goddar, Heinz J.

(57) **Abstract**

Disclosed is a method (100) for manufacturing an electrode assembly (200) for use in a battery, the method comprising receiving an electrode stack (202) comprising a plurality of electrode sheets stacked in a stacking direction, the electrode stack having a first side (202A), a second side (202B) opposite to the first side and a third side (202C) extending between the first and second sides, the first and second sides extending perpendicular or substantially perpendicular to the stacking direction; arranging a first adhesive tape (210) on the first and third sides of the electrode stack such that the first adhesive tape covers the first side at least in part and a portion of the third side abutting the first side; arranging a second adhesive tape (212) on the second and third sides of the electrode stack such that the second adhesive tape covers the second side at least in part and a portion of the third side abutting the second side; and attaching the first adhesive tape and the second adhesive tape to each other for securing the electrode sheets in the electrode stack.

## Description

### TECHNICAL FIELD

The present invention is in the field of battery technology. In particular, the present invention relates to a method and an apparatus for manufacturing an electrode assembly for use in a battery as well as to an electrode assembly and a battery comprising an electrode assembly.

### TECHNICAL BACKGROUND

A battery such as a secondary battery (rechargeable battery) may comprise an electrode assembly with an electrode stack comprising a plurality of electrode sheets that are stacked on top of each other along a stacking direction. The electrode stack may be secured by one or more adhesive tapes that are arranged on a side face of the stack (extending along the stacking direction) and folded around the edges of the stack onto the top and bottom faces thereof. When folding the adhesive tape, however, interferences may occur, e.g., in the vicinity of the edges, for example electrode sheets and/or other layers of the stack (such as separator sheets) may also be folded or bent, may separate from each other and/or may be damaged otherwise. This may affect battery performance and for example cause electrical shorts between electrode sheets of opposite polarity.

### SUMMARY OF INVENTION

Against this background, it is desired to provide means for securing an electrode stack of an electrode assembly for use in a battery that allows for properly securing the electrode stack without creating interferences in the electrode stack.

This object may be achieved by a method for manufacturing an electrode assembly for use in a battery, an apparatus for manufacturing an electrode assembly for use in a battery, an electrode assembly and a battery as set out in the independent claims. Examples thereof are detailed in the dependent claims.

The method according to the present invention may be executed using the apparatus of the present invention according to any one of the examples described herein. Additionally or alternatively, the apparatus according to the present invention may be configured to execute the method of the present invention according to any one of the examples described herein. Further additionally or alternatively, the electrode assembly and/or battery according to the present invention may be manufactured using the method of the present invention according to any one of the examples described herein and/or using the apparatus of the present invention according to any one of the examples described herein. However, unless indicated otherwise, the features of the method, the apparatus, the electrode assembly and the battery according to the present invention do not limit one another. Accordingly, the method according to the present invention may additionally or alternatively also be executed using a different apparatus (or different apparatuses) and/or for manufacturing other electrode assemblies and/or batteries, the apparatus according to the present invention may additionally or alternatively also be used for executing other methods and/or manufacturing other electrode assemblies and/or batteries, and the electrode assembly and/or battery according to the present invention may additionally or alternatively also be manufactured using a different apparatus (or different apparatuses) and/or using a different method.

Any feature or combination of features described herein with regard to the method according to the present invention may also be present for the apparatus according to the present invention and/or the electrode assembly and/or battery according to the present invention. Additionally or alternatively, any feature or combination of features described herein with regard to the apparatus according to the present invention may also be present for the method according to the present invention and/or the electrode assembly and/or battery according to the present invention. Further additionally or alternatively, any feature or combination of features described herein with regard to the electrode assembly and/or battery according to the present invention may also be present for the method according to the present invention and/or the apparatus according to the present invention. For the sake of brevity and to avoid unnecessary repetition, certain features or combination of feature may therefore only be described once with regard to either the method, the apparatus, the electrode assembly and/or the battery, but may likewise apply to the other ones of the method, the apparatus, the electrode assembly and the battery.

A method for manufacturing an electrode assembly for use in a battery is provided. The method comprises receiving an electrode stack comprising a plurality of electrode sheets stacked in a stacking direction. The electrode stack has a first side, a second side opposite to the first side and a third side extending between the first and second sides, wherein the first and second sides extend perpendicular or substantially perpendicular to the stacking direction. A first adhesive tape is arranged on the first and third sides of the electrode stack such that the first adhesive tape covers the first side at least in part and a portion of the third side abutting the first side. A second adhesive tape is arranged on the second and third sides of the electrode stack such that the second adhesive tape covers the second side at least in part and a portion of the third side abutting the second side. The first adhesive tape and the second adhesive tape are attached to each other for securing the electrode sheets in the electrode stack.

The electrode assembly may be for use in a primary battery (non-rechargeable battery) and/or a secondary battery (rechargeable battery). The battery may for example be or comprise a pouch-type battery cell but may alternatively also be embodied as any other type of battery cell known in the art, e.g., a coin-type, cylindrical or prismatic battery cell.

The electrode assembly is manufactured from an electrode stack, which may be provided as a preformed unit or may be formed (e.g., stacked) as part of the method according to the present invention. The electrode stack comprises a plurality of electrode sheets, for example a plurality of first electrode sheets (which may, e.g., be of or for use with a first polarity, e.g., an anode) and a plurality of second electrode sheets (which may, e.g., be of or for use with a second polarity opposite to the first polarity, e.g., a cathode), wherein the first and second electrode sheets may for example be arranged alternatingly along the stacking direction (i.e., a first electrode sheet, a second electrode sheet, another first electrode sheet, another second electrode sheet and so on). The number of electrode sheets is not particularly limited and may for example be between 2 and 200, in some examples between 4 and 100, in one example between 10 and 60. The plurality of electrode sheets or one or more subsets thereof (e.g., some or all of the first electrode sheets or some or all of the second electrode sheets) may be provided as separate (non-contiguous) parts. Additionally or alternatively, the plurality of electrode sheets or one or more subsets thereof (e.g., some or all of the first electrode sheets or some or all of the second electrode sheets) may be provided as a single contiguous part, for example as a single long sheet or web that is folded repeatedly (e.g., in a Z-type fold) to "form" the plurality of electrode sheets (i.e., the some or all of the individual electrode sheets may be portions or segments of a single contiguous part). The electrode sheets may be embodied as commonly known in the art and may for example each comprise an electrically conductive substrate, on which an active material may be deposited.

The electrode stack (which in short may also be referred to as "the stack" herein) may comprise additional elements or layers, for example a plurality of separator sheets. The separator sheets may be arranged between adjacent electrode sheets, e.g., to spatially separate and/or electrically insulate the respective electrode sheets. The electrode stack may for example comprise a plurality of electrode sheets and a plurality of separator sheets that are arranged alternatingly along the stacking direction (i.e., a (e.g., first) electrode sheet, a separator sheet, another (e.g., second) electrode sheet, another separator sheet, another (e.g., first) electrode sheet, another separator sheet and so on). Similar to the electrode sheets, the separator sheets may also be provided as separate (non-contiguous) parts and/or as a single (or a plurality of) contiguous parts, e.g., a single folded separator sheet or web. The separator sheets may be embodied as commonly known in the art. The separator sheets may be configured to spatially separate and/or electrically insulate an electrode sheet from another electrode sheet. The separator sheets may be configured to be impregnated with (e.g., soaked with and/or immersed in) an electrolyte, e.g., so as to allow for the transport of ions therethrough. The separator sheet may for example be made of (e.g., comprise or consist of) a porous insulating material, in particular a microporous insulating material.

A pair of (e.g., adjacent) first and second electrode sheets (and optionally the one or more separator sheets arranged therebetween and/or thereon) may be referred to as a monocell. The monocell may comprise two electrodes of opposite polarity (anode and cathode) and may thus be configured to act as a source of electric power. The monocell may be the fundamental unit (e.g., electrochemical cell) from which the electrode assembly is made up, e.g., by stacking a plurality of monocells.

Some or all of the sheets in the electrode stack maybe laminated to each other, e.g., prior to forming the electrode stack. For example, some or all of the electrode sheets may be laminated to a respective separator sheet arranged on (e.g., below or above) the respective electrode sheet. In some examples, the electrode stack may comprise a plurality of monocells stacked in the stacking direction, wherein the sheets in each monocells (e.g., a first electrode sheet, a first separator sheet, a second electrode sheet and, optionally, a second separator sheet) may be laminated to each other.

The electrode sheets (and, optionally, the separator sheets) in the electrode stack are stacked in a stacking direction, which may also be referred to as the height direction, z-direction or vertical direction herein (without, however, implying a certain orientation with respect to the direction of gravity, i.e., the stacking/vertical direction as used herein (and thus the electrode stack and/or electrode assembly) may have any orientation with respect to the direction of gravity). The stacking direction may for example be the direction along which the centers of the electrode (and/or separator) sheets are arranged. Each electrode or separator sheet may extend perpendicular or substantially perpendicular to the stacking direction (i.e., the stacking direction may correspond to the normal/thickness direction of the sheets, in which the sheets have the smallest extent). As used herein, two elements and/or directions may for example be considered to be substantially perpendicular if the angle between the two elements and/or directions is between 70° and 110°, in some examples less between 80° and 100°, in one example between 85° and 95° and in one example between 88° and 92°. Similarly, two elements and/or directions may for example be considered to be substantially parallel if the angle between the two elements and/or directions is no more than 20°, in some examples no more than 10°, in one example no more than 5° and in one example no more than 2°.

The electrode stack has a first side and a second side that extend perpendicular or substantially perpendicular to the stacking direction. The electrode stack furthermore has a third side that extends between the first and second sides, e.g., parallel or substantially parallel to the stacking direction. The first side may also be referred to as the top side or top face of the electrode stack (again, however, without implying any particular orientation with respect to the direction of gravity). The second side may also be referred to as the bottom side or bottom face of the electrode stack (again, however, without implying any particular orientation with respect to the direction of gravity). Elements at or adjacent to the first side (or closer to the first side than another element) may thus also be referred to as "top", "upper" or using a similar relative term, whereas elements at or adjacent to the second side (or closer to the second side than another element) may also be referred to as "bottom", "lower" or using a similar relative term. The third side (and any other side of the stack extending between the first and second sides such as the fourth side mentioned below) may also be referred to as a or the side face of the electrode stack. A direction perpendicular or substantially perpendicular to the stacking direction and to the third side of the stack (and thus, e.g., parallel or substantially parallel to the electrode sheets) may be referred to as a width direction, along which the width of elements may be measured. A direction perpendicular or substantially perpendicular to the stacking direction and parallel or substantially parallel to the third side of the stack (and thus, e.g., parallel or substantially parallel to the electrode sheets) may be referred to as a length direction, along which the length of elements may be measured. A height or thickness of elements may be measured along the stacking direction (height direction).

The first side and the second side may for example be formed by a topmost layer and a bottommost layer, respectively, of the stack, e.g., the topmost electrode or separator sheet and/or the bottommost electrode or separator sheet. The third side (and, optionally, other side faces) of the electrode stack may for example be formed by the edges (side faces) of the plurality of electrode sheets and/or of the plurality of separator sheets.

The first adhesive tape and/or the second adhesive tape may each be a single-sided adhesive tape (e.g., with adhesive arranged on only one side thereof) or a double-sided adhesive tape (e.g., with adhesive arranged on both sides thereof). The size and shape of the first and second adhesive tapes is not particular limited and may be chosen as suitable for manufacturing the electrode assembly and/or securing the electrode stack. The first and second adhesive tapes may for example be elongated (e.g., rectangular) tapes (i.e., may be longer than wide). A direction along which the first (or second) adhesive tape or a part or portion thereof extends (e.g., in a plane perpendicular or substantially perpendicular to the first and third sides of the electrode stack) may be referred to as the longitudinal direction of the respective tape.

The first adhesive tape is arranged on (e.g., attached to) the first and third sides of the electrode stack, e.g., such that it extends around a first edge (top edge) of the electrode stack at which the third side abuts the first side. The side or surface of the first adhesive tape facing (e.g., in contact with) the first side of the electrode stack may be referred to as the inner or first side/surface of the first adhesive tape. The side or surface of the first adhesive tape opposite to the inner/first side (e.g., facing away from the first side of the electrode stack) may for example be referred to as the outer or second side/surface of the first adhesive tape. At least the inner side and, optionally, the outer side of the first adhesive tape may be adhesive. The first adhesive tape is arranged such that it covers the first side at least in part, e.g., extends over at least 10%, in some examples at least 20%, in one example at least 30% and in one example at least 50% of a width of the first side. The first adhesive tape is further arranged such that it covers (at least) a portion of the third side adjacent to the first side (i.e., at least the topmost portion of the third side). The first adhesive tape may for example extend over between 10% and 100%, in some examples between 20% and 90%, in one example between 30% and 60% of a height of the third side. The first adhesive tape may not be arranged on the second side of the electrode stack (e.g., not extend around the second edge).

The second adhesive tape is arranged on (e.g., attached to) the second and third sides of the electrode stack, e.g., such that it extends around a second edge (bottom edge) of the electrode stack at which the third side abuts the second side. The side or surface of the second adhesive tape facing (e.g., in contact with) the second side of the electrode stack may be referred to as the inner or first side/surface of the second adhesive tape. The side or surface of the second adhesive tape opposite to the inner/first side (e.g., facing away from the second side of the electrode stack) may for example be referred to as the outer or second side/surface of the second adhesive tape. At least the inner side and, optionally, the outer side of the second adhesive tape may be adhesive. The second adhesive tape is arranged such that it covers the second side at least in part, e.g., extends over at least 10%, in some examples at least 20%, in one example at least 30% and in one example at least 50% of a width of the second side. The second adhesive tape is further arranged such that it covers (at least) a portion of the third side adjacent to the first side (i.e., at least the bottommost portion of the third side). The second adhesive tape may for example extend over at least 10%, in some examples between at least 20%, in some examples at least 50% and in some examples at least 80% of the height of the third side. Preferably, the second adhesive tape extends over the entire height of the third side, i.e., (at least) from the second edge to the first edge.

The first adhesive tape and the second adhesive tape are attached to each other for securing (e.g., holding and/or fixing) the electrode sheets in the electrode stack (for example to act against or prevent the electrode sheets from moving relative to each other and/or the electrode stack disintegrating in other ways). In conjunction, the first adhesive tape and the second adhesive tape may extend over the entire height of the third side (e.g., from the first edge to the second edge). The first adhesive tape and the second adhesive tape may form an adhesive tape structure (a composite adhesive tape) extending from the first side along the entire third side to the second side of the stack, thereby forming an (e.g., U-shaped) bracket or clamp or securing the electrode sheets in the electrode stack. The first adhesive tape and the second adhesive tape may be configured to secure the electrode sheets in the electrode stack by themselves or may be used in combination with other securing means such as additional adhesive tapes (i.e., the first and second adhesive tapes may contribute to securing the electrode stack but may for example not be sufficiently strong to fully secure the electrode stack by themselves). The first adhesive tape and the second adhesive tape may for example be used in combination with a plurality of first and second adhesive tapes arranged in the same way along the length of the third side and/or a third adhesive tape and a fourth adhesive tape (or a plurality thereof) arranged in the same way on the first side, the second side and a fourth side of the stack, e.g., as described below.

The first adhesive tape and the second adhesive tape may for example be attached to each other by attaching the inner sides of the first and second tapes to each other, by attaching the inner side of the second tape to the outer side of the first tape and/or by attaching the inner side of the first tape to the outer side of the second tape. The first adhesive tape and the second adhesive tape may for example be attached to each other (e.g., in contact with each other) over between 10% and 90%, in some examples between 20% and 60% of a length of the first and/or second adhesive tape (along the longitudinal direction of the respect tape).

The first adhesive tape may be arranged on the first and third sides of the electrode stack by first arranging the first adhesive tape on the first side of the electrode stack such that a first portion of the first adhesive tape covers the first side of the electrode stack at least in part and a second portion of the first adhesive tape extends beyond the first edge of the electrode stack at which the third side of the electrode stack abuts the first side of the electrode stack. At this point, the second portion of the first adhesive tape may not be in contact with the electrode stack but may, e.g., protrude beyond the first edge parallel or substantially parallel to the first side of the stack. The first adhesive tape may then be folded (e.g., bent or curved) around the first edge of the electrode stack to arrange at least a first part of the second portion, in some examples the entire second portion of the first adhesive tape on the third side of the electrode stack. In other words, the first adhesive tape may first be arranged on the first side of the electrode stack before arranging the first adhesive tape on the third side of the electrode stack. This may for example be advantageous for avoiding interferences at the first edge of the stack.

Additionally or alternatively, the second adhesive tape may be arranged on the second and third sides of the electrode stack in a similar fashion. The second adhesive tape may first be arranged on the second side of the electrode stack such that a first portion of the second adhesive tape covers the second side of the electrode stack at least in part and a second portion of the second adhesive tape extends beyond the second edge of the electrode stack at which the third side of the electrode stack abuts the second side of the electrode stack. The second adhesive tape may then be folded around the second edge of the electrode stack to arrange at least a first part of the second portion (in one example the entire second portion) of the second adhesive tape on the third side of the electrode stack.

The first adhesive tape and the second adhesive tape may be attached to each other by attaching a second part of the second portion of the first adhesive tape (e.g., the inner side thereof) and a second part of the second portion of the second adhesive tape (e.g., the inner side thereof) to each other. When being attached, the aforementioned second parts may not be arranged on the electrode stack but may, e.g., protrude therefrom, for example perpendicular or substantially perpendicular to the third side. For each of the first and second adhesive tapes, the first part of the second portion may be arranged between the first portion and the second part of the second portion. The aforementioned second parts may for example be an end portion of the respective adhesive tape (i.e., may contain an end of the respective adhesive tape).

Additionally or alternatively, the first adhesive tape and the second adhesive tape may be attached to each other by attaching the second part of the second portion of the second adhesive tape (e.g., the inner side thereof) to the second portion of the first adhesive tape arranged on the third side (e.g., the outer side thereof) or vice-versa (i.e., the second part of the second portion of the first adhesive tape to the second portion of the first adhesive tape arranged on the third side). This way of attaching may for example be chosen when the entire second portion of one of the adhesive tapes is arranged on the third side (and then covered by the second part of the second portion of the other adhesive tape, which prior to the attaching may not yet be arranged on the electrode stack).

The second part of the second portion of the second adhesive tape may be longer than the second part of the second portion of the first adhesive tape. Accordingly, when the second parts are attached to each other for attaching the first and second adhesive tapes, the second part of the second portion of the second adhesive tape may protrude beyond the end of the first adhesive tape (i.e., only a part of the second part of the second portion of the second adhesive tape may be attached to the (entire) second part of the second portion of the first adhesive tape).

The method may then further comprise arranging the second part (e.g., the inner side thereof) of the second portion of the second adhesive tape (i.e., the part thereof that is not yet attached to the first adhesive tape) on the first adhesive tape (e.g., the outer side thereof, for example on the second portion and/or on the first portion of the first adhesive tape). The second part of the second portion of the second adhesive tape may for example be wrapped around the end portion (e.g., the entire second portion) of the first adhesive tape). Additionally or alternatively, the second part (e.g., the inner side thereof) of the second portion of the second adhesive tape (i.e., the part thereof that is not yet attached to the first adhesive tape) may also be arranged on the first side of the electrode stack (e.g., on the first portion of the first adhesive tape arranged on the first side and/or on a part of the first side of the electrode stack not covered by the first adhesive tape, e.g., in direct contact with the first side). The second part of the second portion of the second adhesive tape may for example be folded around the first edge of the electrode stack.

Arranging the second part of the second portion of the second adhesive tape as described in the preceding paragraph may also comprise arranging the second part of the second portion of the first adhesive tape on the first part of the second portion of the first adhesive tape and, optionally, on the first portion of the first adhesive tape (e.g., folding back the second part of the second portion of the first adhesive tape onto the outer side of the first adhesive tape). The second part of the second portion of the first adhesive tape may for example be arranged between the second part of the second portion of the second adhesive tape and the third side.

The first adhesive tape may be folded around the first edge of the electrode stack using a first moveable roller (e.g., of the apparatus according to the present invention) that is moved (e.g., rolled) along the third side of the electrode stack to arrange the first adhesive tape thereon. The first roller may for example press against the second portion of the first adhesive tape extending beyond the first edge to bend the first adhesive tape around the first edge (e.g., downwards/towards the second side) and may then roll on the second portion of the first adhesive tape along the third side of the electrode stack (towards the second side), rolling out/unrolling the second portion onto the third side (and pressing the second portion against the third side).

Additionally or alternatively, the second adhesive tape may be folded around the second edge of the electrode stack using a second moveable roller (e.g., of the apparatus according to the present invention) that is moved (e.g., rolled) along the third side of the electrode stack to arrange the second adhesive tape thereon. The second roller may for example press against the second portion of the second adhesive tape extending beyond the second edge to bend the second adhesive tape around the second edge (e.g., upwards/towards the first side) and may then roll on the second portion of the first adhesive tape along the third side of the electrode stack (towards the first side), rolling out/unrolling the second portion onto the third side (and pressing the second portion against the third side). The first and second moveable rollers may be moved in opposite directions, e.g., the first roller from the first side to the second side (downwards) and the second roller from the second side to the first side (upwards).

The second part of the second portion of the first adhesive tape and the second part of the second portion of the second adhesive tape may be attached to each other using the first and second rollers, e.g., by pressing the second parts against each other (after rolling out the first parts on the third side). This may for example comprise pressing the second part of the second portion of the second adhesive tape against the second part of the second portion of the first adhesive tape with the second roller. At the same time, the first roller may be moved away from the electrode stack on the second part of the second portion of the first adhesive tape, thereby, e.g., unrolling the second part of the second portion of the first adhesive tape on the second part of the second portion of the second adhesive tape (which may protrude from the third side).

The second part of the second portion of the second adhesive tape may be arranged on the first adhesive tape and/or on the first side of the electrode stack (e.g., as described above) by moving (e.g., rolling) the second roller along the third side of the electrode stack and, optionally, along the first side of the electrode stack (i.e., around the first edge). Thereby the second part of the second portion of the second adhesive tape may be unrolled on the first adhesive tape, folded around the first edge and/or unrolled the first side of the electrode stack.

While arranging the first adhesive tape on the electrode stack, the first adhesive tape may be held (at least temporarily, e.g., during a part of the arranging process) by a first holding member. The first adhesive tape may for example be held by the first adhesive member by suction, e.g., by creating a low/negative pressure or vacuum on one side of the first adhesive tape for the first adhesive tape to be pressed and/or sucked against the first holding member. Additionally or alternatively, the holding member may also hold the first adhesive tape by other means, e.g., mechanically (for example using a gripper or claw). Arranging the first adhesive tape on the first side of the electrode stack may comprise holding the first adhesive tape using the first holding member (e.g., by suction) and pressing the first adhesive tape against the first side of the electrode stack with the first holding member (e.g., by moving the first holding member wit the first adhesive tape towards and against the first side). In some examples, the first adhesive tape may also be pressed against the first side of the electrode stack with the first holding member while folding the first adhesive tape around the first edge, attaching the first adhesive tape and the second adhesive tape to each other, and/or arranging the second part of the second portion of the second adhesive tape on the first adhesive tape.

Additionally or alternatively, the second adhesive tape may also be held (at least temporarily, e.g., during a part of the arranging process) by a second holding member in the same fashion. Arranging the second adhesive tape on the second side of electrode stack may for example comprise holding the second adhesive tape using the second holding member, preferably by suction, and pressing the second adhesive tape against the second side of the electrode stack with the second holding member. In some examples, the second adhesive tape may also pressed against the second side of the electrode stack with the second holding member while folding the second adhesive tape around the second edge, attaching the first adhesive tape and the second adhesive tape to each other, arranging the second part of the second portion of the second adhesive tape on the first adhesive tape and/or arranging the second part of the second portion of the second adhesive tape on the first side of the electrode stack.

Arranging the second part of the second portion of the second adhesive tape on the first adhesive tape and/or on the first side of the electrode stack may comprise releasing the first adhesive tape from the first holding member, moving the first holding member away from first side of the electrode stack (e.g., upwards) and arranging the second part of the second portion of the second adhesive tape on the first portion of the first adhesive tape and/or on the first side of the electrode stack, e.g., by moving the second roller along the first side of the electrode stack.

In some examples, one or both of the first and second holding members may additionally or alternatively also be used for (e.g., temporarily) securing the electrode sheets in the electrode stack, e.g., by arranging (e.g., holding) the electrode stack between the first and second holding members (which may for example press against the first and second side, respectively, to clamp the electrode stack therebetween). The electrode sheets may for example be secured in this may while performing one or more of the following: folding the first adhesive tape around the first edge, folding the second adhesive tape around the second edge, attaching the first adhesive tape and the second adhesive tape to each other, and arranging the second part of the second portion of the second adhesive tape on the first adhesive tape and/or on the first side of the electrode stack.

The method may comprise arranging additional pairs of tapes in the same way as the first adhesive tape and the second adhesive tape (e.g., on the same sides of the electrode stack and by performing the same steps) or in a similar way as the first adhesive tape and the second adhesive tape (e.g., on different sides of the electrode stack, omitting one or more of the steps for arranging the first and second adhesive tapes and/or performing one or more steps in addition that are not performed for the first and second adhesive tapes).

The method may for example comprise arranging another (second) pair of a first adhesive tape and a second adhesive tape on the first, second and third sides as described above. The second pair of a first adhesive tape and a second adhesive tape may for example be arranged so as to be displaced with respect to the first pair of a first adhesive tape and a second adhesive tape along the length direction (e.g., along a direction parallel to the first and third sides and/or along the circumference of the first side). In some examples, a plurality of pairs of a respective first adhesive tape and a respective second adhesive tape may be arranged displaced with respect to each other along the length direction (e.g., distributed across the third side). The plurality of pairs may for example comprise between 2 and 20 pairs, in some examples between 3 and 10 pairs.

Additionally or alternatively, the method may comprise arranging a third adhesive tape on the first side and a fourth side of the electrode stack, the fourth side extending between the first and second sides of the electrode stack, the third adhesive tape being arranged such that the third adhesive tape covers the first side at least in part and a portion of the fourth side abutting the first side. The fourth side is different from the third side and may in particular be the side opposite to the third side. A fourth adhesive tape on the second and fourth sides of electrode stack may be arranged such that the fourth adhesive tape covers the second side at least in part and a portion of the fourth side abutting the second side. The third adhesive tape and the fourth adhesive tape may be attached to each other for securing the electrode sheets in the electrode stack. Arranging the third and fourth adhesive tapes may further comprise one or more, in some examples all of the additional steps and/or features described above for arranging the first and second adhesive tapes. In some examples, a plurality of pairs of a respective third adhesive tape and a respective fourth adhesive tape may be arranged on the fourth side of the electrode stack, e.g., as described above for the pairs of a first adhesive tape and a second adhesive tape.

The present invention further provides an apparatus for manufacturing an electrode assembly for use in a battery. The apparatus is configured to receive an electrode stack comprising a plurality of electrode sheets stacked in a stacking direction, the electrode stack having a first side, a second side opposite to the first side and a third side extending between the first and second sides, the first and second sides extending perpendicular or substantially perpendicular to the stacking direction. The apparatus comprises a taping assembly for securing the electrode sheets in the electrode stack by applying adhesive tapes thereto. The taping assembly is configured to arrange a first adhesive tape on the first and third sides of the electrode stack such that the first adhesive tape covers the first side at least in part and a portion of the third side abutting the first side. The taping assembly is further configured to arrange a second adhesive tape on the second and third sides of the electrode stack such that the second adhesive tape covers the second side at least in part and a portion of the third side abutting the second side. The taping assembly is further configured to attach the first adhesive tape and the second adhesive tape to each other for securing the electrode sheets in the electrode stack.

The apparatus may be configured to form the electrode stack, e.g., by stacking the electrode sheets, and optionally, the separator sheets. In other examples, the electrode stack may be provided to the apparatus, e.g., from a stacking apparatus. The apparatus may comprise a mount for receiving the electrode stack, wherein the mount may for example be configured to hold the electrode stack while arranging the first and second adhesive tapes thereon. Unless mentioned otherwise or technically unfeasible, all references to the electrode stack in the context of the apparatus according to the present invention may refer to the electrode stack when received by (e.g., arranged in and/or on) the apparatus (e.g., received by or held by the mount).

The taping assembly may be configured to arrange the first adhesive tape and/or the second adhesive tape on the electrode stack and/or to attach the first and second adhesive tapes to each other as described above for the method according to the invention.

The taping assembly may comprise a first moveable roller configured to be moved along the third side of the electrode stack for folding the first adhesive tape around the first edge of the electrode stack at which the third side of the electrode stack abuts the first side of the electrode stack to arrange the first adhesive tape on the third side of the electrode stack, e.g., as described above. The first roller may for example be rotatable about a rotation axis parallel or substantially parallel to the first and third sides of the electrode stack (e.g., received by the apparatus). As used herein, the term "rotation axis" may refer to a mathematical axis, which does not necessarily imply the presence of a corresponding mechanical axis (e.g., a shaft or rod). The rotation axis may, however, also be a mechanical axis in some examples. The rotation axis may be moveable in a plane that is perpendicular or substantially perpendicular to the first and third sides of the electrode stack, e.g., along a predefined path (e.g., by moving the (mechanical) rotation axis along a guide track such as a rail) or freely. The first roller may, e.g., have a cylindrical shape. The taping assembly may comprise an actuator for moving the first roller, e.g., moving the rotation axis and/or rotating the first roller about the rotation axis. In other examples, rotation of the first roller may not be achieved by (active) actuation but the first roller may, e.g., be freewheeling about the rotation axis.

Additionally or alternatively, the taping assembly may comprise a second moveable roller configured to be moved along the third side of the electrode stack for folding the second adhesive tape around the second edge of the electrode stack at which the third side of the electrode stack abuts the second side of the electrode stack to arrange the second adhesive tape on the third side of the electrode stack. The second roller may be embodied as described above for the first roller (with the first side being replaced by the second side instead).

The taping assembly may comprise a first holding member configured to hold the first adhesive tape, preferably by suction, and press the first adhesive tape against the first side of the electrode stack. The first holding member may for example be configured to generate an air flow towards the first holding member and/or a low/negative pressure or vacuum on one side of the first adhesive tape (e.g., the outer side opposite to the inner side that is to be arranged on the first side. Additionally or alternatively, the holding member may also be configured to hold the first adhesive tape by other means, e.g., mechanically (for example using a gripper or claw). The first holding member may be moveable, e.g., towards and away from the first side of the electrode stack. The first holding member may also be configured to (e.g., temporarily) secure the electrode sheets in the electrode stack, e.g., in conjunction with the second holding member, for example by arranging (e.g., holding or clamping) the electrode stack between the first and second holding members.

Additionally or alternatively, the taping assembly may also comprise a second holding member configured to hold the second adhesive tape, preferably by suction, and press the second adhesive tape against the second side of the electrode stack. The second holding member may be embodied as described above for the first holding member (replacing the first side by the second side).

The apparatus may be for (e.g., suitable for) manufacturing the electrode assembly using the method of the present invention according to any one of the examples described herein. The apparatus may in particular be configured to execute some or all of the steps of the method of the present invention according to any one of the examples described herein to arrange the first and second adhesive tapes on the electrode stack, e.g., using the taping assembly, the first and/or second moveable rollers, and/or the first and/or second holding members. The apparatus may be configured to do so automatically or semi-automatically. The apparatus may for example comprise a controller configured to control the taping assembly for executing the respective steps, wherein the controller may, e.g., comprise a processor and a memory storing instructions for execution by the processor to provide the corresponding functionality.

The present invention further provides an electrode assembly for use in a battery. The electrode assembly comprises an electrode stack comprising a plurality of electrode sheets stacked in a stacking direction. The electrode stack has a first side, a second side opposite to the first side and a third side extending between the first and second sides, wherein the first and second sides extend perpendicular or substantially perpendicular to the stacking direction. A first adhesive tape is arranged on (e.g., attached to) the first and third sides of electrode stack such that the first adhesive tape covers the first side at least in part and a portion of the third side abutting the first side. A second adhesive tape is arranged on (e.g., attached to) the second and third sides of electrode stack such that the second adhesive tape covers the second side at least in part and a portion of the third side abutting the second side. The first and second adhesive tapes are attached to each other for securing the electrode sheets in the electrode stack.

The first adhesive tape and/or the second adhesive tape may for example be embodied, arranged on the electrode stack and/or attached to each other as described above for the method according to the present invention.

The portion of the first adhesive tape that is attached to the second adhesive tape (e.g., the second portion of the first adhesive tape as referred to herein) may be folded over and arranged at the third side and, optionally, the first side of the electrode stack. For example, a second part of this portion of the first adhesive tape may be folded back (e.g., by 180°) and arranged on a first part of this portion, which may be arranged on the third and/or first side of the electrode stack (e.g., such that the second surface/outer side (see below) of the second part faces the first part and the electrode stack).

The first adhesive tape may have a first surface (inner surface or first/inner side) facing (e.g., arranged on and/or in contact with) the first and third sides of the electrode stack and a second surface (outer surface or outer/inner side) facing away from the first and third sides of the electrode stack. The second adhesive tape may be attached to (e.g., in contact with) the first/inner surface of the first adhesive tape in the folded-over portion (second portion, e.g., the second part thereof) of the first adhesive tape. Additionally or alternatively, the second adhesive tape (e.g., an inner side/first surface thereof) may be attached to the second surface of the first adhesive tape in a portion (e.g., the first portion) of the first adhesive tape arranged on one or both of the first and third sides of the electrode stack. At least the first surface and, optionally, also the second surface of the first adhesive tape may be adhesive. At least the first surface and, optionally, also the second surface of the second adhesive tape may be adhesive

In some examples, the second adhesive tape may completely cover the first adhesive tape. The second adhesive tape may for example extend from the second side (and/or from a portion of the third side not covered by the first adhesive tape) along the entire first adhesive tape on the electrode stack (e.g., along both the folded-over/second portion and the first portion) to a portion of the first side not covered by the first adhesive tape.

A part of the second adhesive tape (e.g., the second portion of the second adhesive tape, for example the second part thereof) may be directly attached to (e.g., in contact with) the first side of the electrode stack without the first adhesive tape being arranged therebetween. The second adhesive tape may for example be directly attached to the first and second side and, optionally, the third side of the stack with the first adhesive tape being arranged between the stack and the second adhesive tape at and in the vicinity of the first edge (e.g., such that in this region, the second adhesive tape - while being arranged on (and attached to) the electrode stack - is not in (direct) contact with the electrode stack but spatially separated therefrom (and indirectly attached thereto) by the first adhesive tape as an intermediate layer).

The electrode assembly may comprise a plurality of first adhesive tapes and a plurality of second adhesive tapes. Each of the first adhesive tapes may cover the first side at least in part and a respective portion of the third side abutting the first side. Each of the second adhesive tapes may cover the second side at least in part and a respective portion of the third side abutting the second side. Each of the first adhesive tapes may be attached to a respective one of the second adhesive tapes for securing the electrode sheets in the electrode stack, e.g., to form a pair of a first adhesive tape and a second adhesive tape as described above. The pairs (of a first adhesive tape and a second adhesive tape each) may be displaced from each other along the circumference of the electrode stack/the length direction (e.g., arranged or distributed along the third side).

Additionally or alternatively, the electrode assembly may comprise one or more pairs of a third adhesive tape and a fourth adhesive tape arranged on the electrode stack as the first adhesive tape(s) and the second adhesive tape(s) but on a fourth side of the electrode stack instead of the third side (e.g., the side of the electrode stack opposite to the third side).

The electrode assembly according to the present invention may be comprised in (e.g., arranged or integrated into) a battery. Accordingly, there is also provided a battery comprising an electrode assembly according to any one of the examples described herein. The battery may be a primary battery or a secondary battery. The battery may be or comprise one or more pouch-type battery cells (e.g., one or more pouch-type primary or secondary batteries). Additionally or alternatively, the battery may also be or comprise one or more battery cells of other types, e.g., one or more coin-type, cylindrical and/or prismatic battery cells. Each of the battery cells may comprise an electrode assembly according to the present invention.

### BRIEF DESCRIPTION OF DRAWINGS

The accompanying drawings illustrate some particular examples and are intended to help understanding the present invention. Herein and in the drawings, a same reference sign or a series of reference signs may be used in different examples to indicate a same, similar or corresponding element.

It is noted that the features shown in the drawings may not be true to scale. Particularly, some features may be illustrated in an enlarged or size-reduced manner such as to emphasize the technical concept and the working principle of the present invention rather than providing a layout or a template for constructing the apparatus, electrode assembly or battery according to the present invention.

In the drawings, the x-direction may correspond to the aforementioned width direction, the y-direction may correspond to the aforementioned length direction and the z-direction may correspond to the aforementioned stacking direction.
FIG. 1 shows a flow diagram of a method for manufacturing an electrode assembly for use in a battery according to an example.
FIG. 2 shows a schematic illustration of an electrode stack according to an example in side view.
FIG. 3a, 3b, 3c and 3d show schematic illustrations of an electrode assembly in an apparatus for manufacturing an electrode assembly in side view during various stages of manufacturing the electrode assembly according to an example.
FIG. 4a and 4b show schematic illustrations of a battery with an electrode assembly according to an example in top view and side view, respectively.

### DETAILED DESCRIPTION

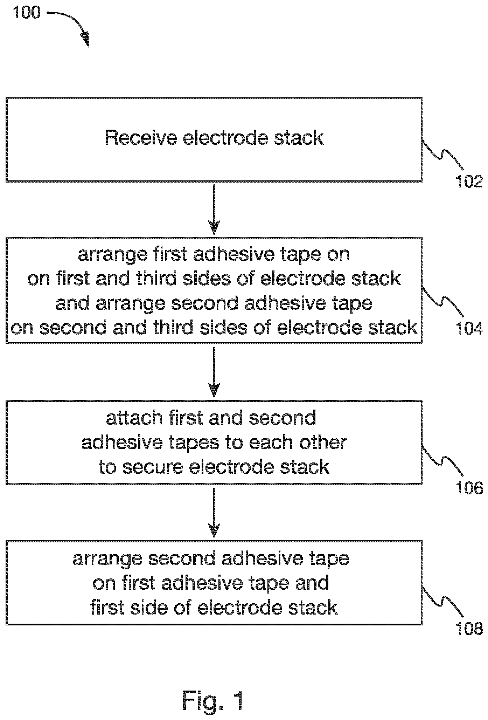

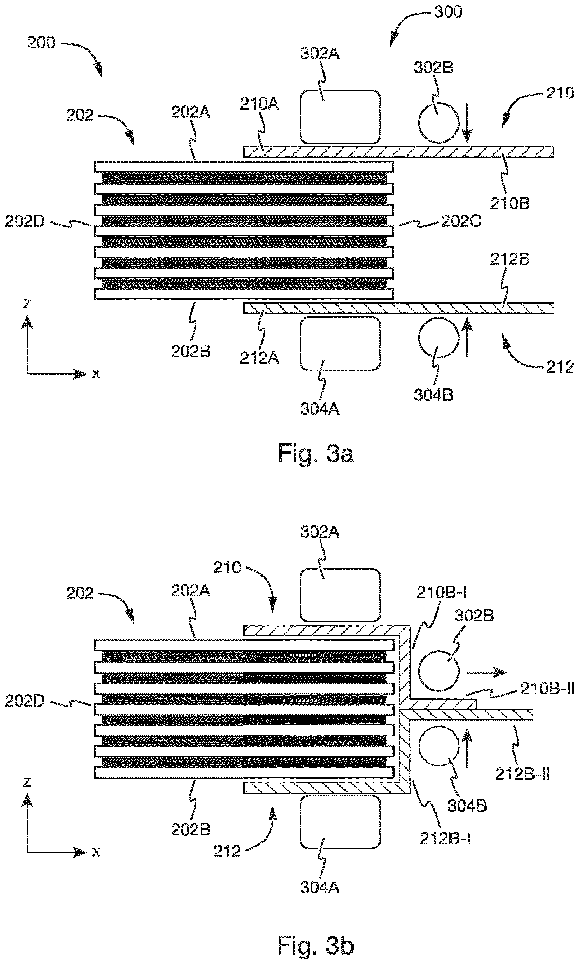

FIG. 1 shows a flow diagram of a method 100 for manufacturing an electrode assembly for use in a battery according to an example. The method 100 may for example be used for manufacturing an electrode assembly according to the invention such as the electrode assembly 200 depicted in FIG. 3a to 3d and/or may for example be executed using an apparatus for manufacturing an electrode assembly for use in a battery according to the invention such as the apparatus 300 depicted in FIG. 3a to 3d. The electrode assembly 200 of FIG. 3a to 3d and the apparatus 300 of FIG. 3a to 3d are therefore used as non-limiting examples for illustration purposes in the following. The method 100 is not limited to the order of execution implied by the flow diagram in FIG. 1 or described below. As far as technically feasible, the steps of method 100 may be executed in an arbitrary order and may also be executed simultaneously at least in part (e.g., steps 106 and 108).

In step 102, an electrode stack 202 is received (e.g., provided), for example received by or provided to the apparatus 300. The electrode stack 202 may be received as a preformed unit (e.g., from a different apparatus) or may be formed as part of step 102 (e.g. using the apparatus 300).

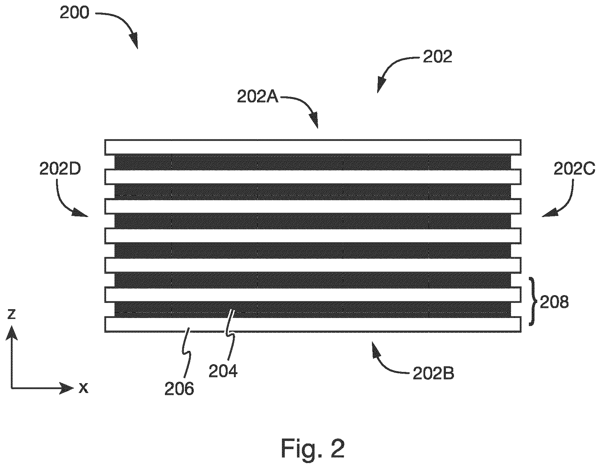

The electrode stack 202 may for example be embodied as schematically illustrated in FIG. 2. In this example, the electrode stack 202 comprises a plurality of electrode sheets 204 and a plurality of separator sheets 206 that are alternatingly stack in a stacking direction (z-direction). The plurality of electrode sheets 204 may comprise a plurality of first electrode sheets (which may for example be associated with a first polarity, e.g., for use as an anode) and a plurality of second electrode sheets (which may for example be associated with a second polarity opposite to the first polarity, e.g., for use as a cathode). The first and second electrode sheets may be arranged alternatingly in the stack 202, e.g., in the order (first) separator sheet, first electrode sheet, (second) separator sheet, second electrode sheet and so on. A first separator sheet, a first electrode sheet, a second separator sheet and a second electrode sheet stacked on top of each other may form a monocell 208. The electrode stack may comprise a plurality of monocells 208 stacked on top of each other, for example between 2 and 100 monocells, in one example between 5 and 30 monocells.

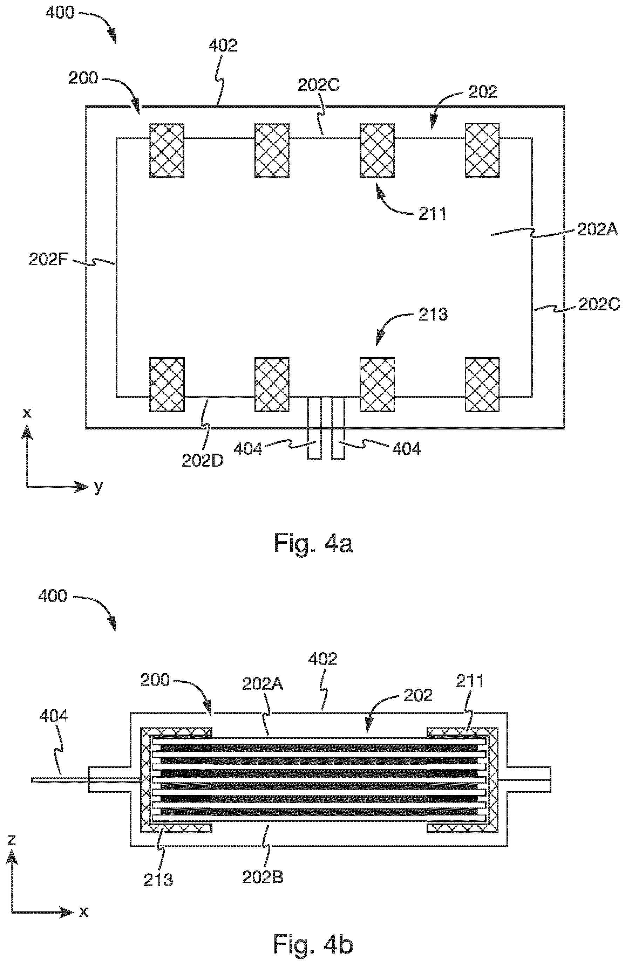

The electrode stack 202 has a first/top side 202A and a second/bottom side 202B opposite to the first side 202A. Both the first side 202A and the second side 202B extend (substantially) perpendicular to the stacking direction (e.g., in the x-y-plane). In the example of FIG. 2, the first side 202A and the second side 202B are formed by the topmost and bottommost separator sheet 206, respectively. The electrode stack 202 has a third side 202C and a fourth side 202D that are arranged opposite to each other and each extend between the first side 202A and the second side 202B (e.g., in the y-z-plane). The electrode stack 202 may further have a fifth side 202E and a sixth side 202F that are also arranged opposite to each other and each extend between the first side 202A and the second side 202B and between the third side 202C and the fourth side 202D (e.g., in the x-z-plane perpendicular to the direction of view in FIG. 2), for example as illustrated in FIG. 4a. In the example of FIG. 2, the third to sixth sides 202C-D are formed by the edges/side faces of the electrode sheets 204 and separator sheets 206. In some examples, the electrode sheets 204 and the separator sheets 206 may have different widths and/or lengths, e.g. such that the separator sheets 206 protrude between the electrode sheets 204, for example to avoid electrical shorts between adjacent electrode sheets 204.

In steps 104 to 108, a first adhesive tape 210 and a second adhesive tape 212 are arranged on (e.g., attached to) the electrode stack 202 to secure the electrode sheets 204 and the separator sheets 206 therein, e.g., to prevent the sheets 204 and 206 from sliding relative to each other during use of the battery. The first adhesive tape 210 and/or the second adhesive tape 212 may for example comprise or consist of a thermoplastic polymer such as polyethylene terephthalate (PET). The first adhesive tape 210 and/or the second adhesive tape 212 may for example have a width (perpendicular to the longitudinal direction of the respective tape) of between 10 mm and 100 mm, in some examples between 30 mm and 50 mm and/or a thickness of between 10 µm and 100 µm, in some examples between 20 µm and 30 µm. The first and second adhesive tapes 210 and 212 may be arranged on the electrode stack 202 using the apparatus 300, which for this purpose comprises a taping assembly formed by a pair of (first and second) holding members 302A, 304A and a pair of (first and second) moveable rollers 302B, 304B. The holding members 302A, 304A are configured to hold an adhesive tape, for example by suction. The first and second adhesive tapes 210, 212 may for example be provided by picking up the adhesive tapes from a respective supply and/or moving the adhesive tapes to the electrode stack 202 using the first and second holding member 302A, 304, respectively. The rollers 302B, 304B are rotatable (e.g., freewheeling) about a respective rotation axis and are moveable in the x-z-plane as detailed below and illustrated by the arrows next to the rollers 302B, 304B in FIG. 3a to 3d.

In step 104, the first adhesive tape 210 is arranged on the first and third sides 202A, 202C of the electrode stack 202 and the second adhesive tape 212 is arranged on the second and third sides 202B, 202C of the electrode stack 202. The first adhesive tape 210 is arranged such that the first adhesive tape 210 covers the first side 202A at least in part and a portion of the third side 202C abutting the first side 202A. The second adhesive tape 212 is arranged such that the second adhesive tape 212 covers the second side 202B at least in part and a portion of the third side 202C abutting the second side 202B.

This may for example be achieved as illustrated in FIG. 3a and 3b and detailed in the following.

First, the first adhesive tape 210 and the second adhesive tape 212 is arranged on the first and second side 202A, 202B, respectively, of the electrode stack 202 as shown in FIG. 3a. The first adhesive tape 210 and the second adhesive tape 212 may for example be held by the first and second holding member 302A, 302B, respectively, and may be brought in contact with (e.g., pressed against) the first and second side 202A, 202B, respectively by the first and second holding member 302A, 302B, respectively. Each of the first and second adhesive tapes 210, 212 comprises an inner/first side or surface (which is adhesive) and an outer/second side or surface opposite to the inner side (which may or may not be adhesive). The first and second adhesive tapes 210, 212 are arranged on the first and second side 202A, 202B, respectively, with the (adhesive) inner side of the tape facing and in contact with the respective side of the electrode stack. The first and second adhesive tapes 210, 212 may be arranged simultaneously (at the same time) or sequentially (one after the other).

The first adhesive tape 210 and the second adhesive tape 212 are arranged such that a first portion 210A, 212A of each tape 210, 212 covers a part of the first and second side 202A, 202B, respectively, of the electrode stack 202 while a second portion 210B, 212B extends beyond an edge of the respective side 202A, 202B so as to protrude beyond the third side 202C as shown in FIG. 3a.

Subsequently, a first part 210B-I, 212B-I of the second portion 210B, 212B of each tape 210, 212 (which, in short, may also be referred to as the first part of the respective tape and is adjacent to the first portion 210A, 212A of the respective tape) is arranged on the third side 202C of the electrode stack 202, cf. FIG. 3b. For this, the first roller 302B, which initially may be arranged above the first side 202A of the electrode stack 202, may be moved downwards (towards the second side 202B), to fold the first adhesive tape 210 around the (first) edge of the electrode stack 202 at which the first and third sides 202A, 202C abut (i.e., the upper right corner in FIG. 3a). The first roller 302B may then be rolled along the third side 202C to arrange the first part 210B-I of the first adhesive tape 210 thereon (with its adhesive inner side facing the third side 202C). Similarly (either at the same time or before or after arranging the part 210B-I), the second roller 304B, which initially may be arranged below the second side 202B of the electrode stack 202, may be moved upwards (towards the first side 202A), to fold the second adhesive tape 212 around the (second) edge of the electrode stack 202 at which the second and third sides 202B, 202C abut (i.e., the lower right corner in FIG. 3a). The second roller 304B may then be rolled along the third side 202C to arrange the first part 212B-I of the second adhesive tape 212 thereon (with its adhesive inner side facing the third side 202C).

In step 106, the first adhesive tape 210 and the second adhesive tape 212 are attached to other for securing the electrode sheets 204 and the separator sheets 206 in the electrode stack 202.

This may for example be achieved as illustrated in FIG. 3b and detailed in the following.

After arranging the first parts 210B-I, 212B-I of the second portions 210B, 212B of the first and second adhesive tapes 210, 212 on the third side 202C of the electrode stack 202, the second parts 210B-II, 212B-II of the second portions 210B, 212B of the first and second adhesive tapes 210, 212 (which, in short, may also be referred to as the second part of the respective tape and is separate from the first portion 210A, 212A of the respective tape by the first part 210B-I, 212B-II) are pressed against each other by the first and/or second moveable rollers 302B, 304B. The first roller 302B is moved away from the third side 202C of the electrode stack 202, for example by rolling the first roller 302B on the second part 210B-II of the first adhesive tape 210 away from the third side 202C (e.g., while continuing to press the second part 212B-II of the second adhesive tape 212 against the second part 210B-II of the first adhesive tape 210 with the second roller 304B). Thereby, the second part 210B-II of the first adhesive tape 210 is attached to the second part 212B-II of the second adhesive tape 212.

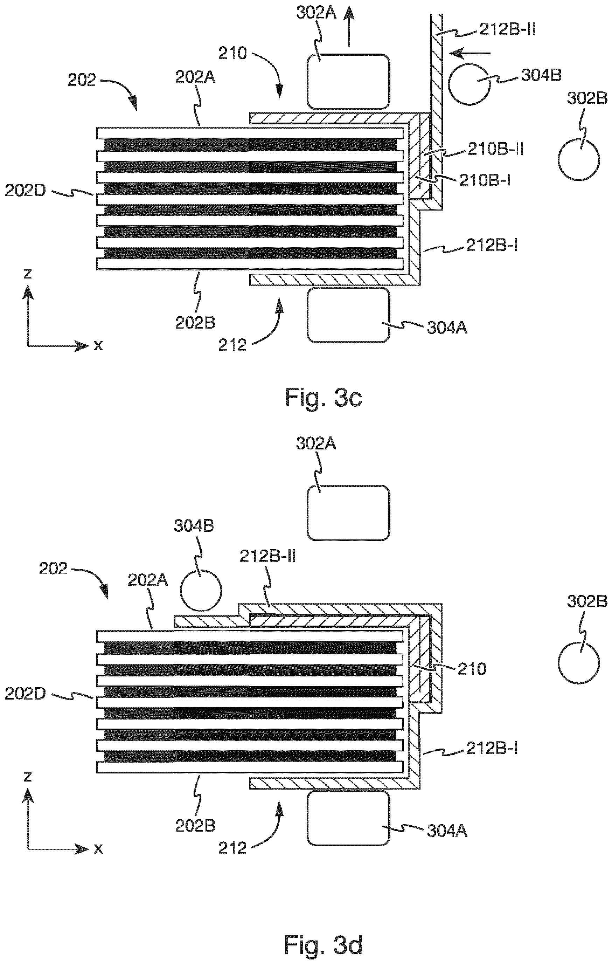

In some examples, the second part 212B-II of the second adhesive tape 212 may be longer than the second part 210B-II of the first adhesive tape 210 as illustrated in FIG. 3b, e.g., by choosing the second adhesive tape 212 to be longer than the first adhesive tape 210. In FIG. 3a to 3c, the second part 212B-II of the second adhesive tape 212 is illustrated with an open end to indicate that the second part 212B-II may actually be longer than is shown in these drawings (e.g., as illustrated in FIG. 3d).

In optional step 108, the second adhesive tape 212 (e.g., the portion of the second part 212B-II protruding beyond the end of the second part 210B-II of the first adhesive tape 210) may be arranged on the first adhesive tape 210 and/or the first side 202A of the electrode stack 202.

This may for example be achieved as illustrated in FIG. 3c and 3d and detailed in the following.

After the first roller 302B is moved away from the electrode stack 202, the second roller 304B may be moved further along the third side 202C (e.g., rolling on the second part 212B-II of the second adhesive tape 212). Thereby, the second part 210B-II of the first adhesive tape 210 may be folded back (e.g., by 180°), forming a folded-over second portion 210B of the first adhesive tape 210 (with the first part 210B-I being arranged between the third side 202C of the electrode stack and the second part 210B-II and the outer sides of the first adhesive tape 210 in the first and second parts 210B-I, 210B-II being in contact with each other and, if adhesive, being attached to each other). The second part 212B-II of the second adhesive tape 212 is arranged on the folder-over second portion 210B of the first adhesive tape 210 (with the second part 210B-II of the first adhesive tape 210 being arranged between the first part 210BI of the first adhesive tape 210 and the second part 212B-II of the second adhesive tape 212 and the (adhesive) inner side of the first adhesive tape 210 in the folded-back second part 210B-II being in contact with and attached to the (adhesive) inner side of the second adhesive tape 212 in the second part 212B-II).

The second roller 304B may be moved along the entire height of the third side 202C of the electrode stack 202 up to the first edge (cf. FIG. 3c). The second roller 304B may then be moved along the first side 202A (continuing to roll on the second adhesive tape 212), thereby folding the second adhesive tape 212 around the first edge and onto the first portion 210A of the first adhesive tape 210 arranged on the first side 202A of the electrode stack 202. For this, the first adhesive tape 210 may be released from the first holding member 302A and the first holding member 302A may be moved away from the first side 202A of the electrode stack 202. This may, e.g., occur at any point between FIG. 3a and FIG. 3c. By further moving the second roller 304B along the first side 202A, the remainder of the second part 212B-II of the second adhesive tape 212 may then be rolled out on the first portion 210A of the first adhesive tape 210 and, if sufficiently long as in the example of FIG. 3d, on the first side 202A (beyond the end of the first adhesive tape 210) to directly attach the second adhesive tape 212 to the first side 202A without the first adhesive tape 210 being arranged therebetween.

In some examples, steps 104 to 108 may be repeated to arrange additional pairs of a first adhesive tape and a second adhesive tape on the third side 202C of the electrode stack 202, e.g., as illustrated in FIG. 3a to 3d and described above. Additionally or alternatively, steps 104 and 108 may also be repeated to arrange one or more pairs of a third adhesive tape and a fourth adhesive tape on the fourth side 202D of the electrode stack 202 opposite to the third side 202C, wherein each of these pairs may also be arranged as illustrated in FIG. 3a to 3d and described above with the only difference being that the third and fourth adhesive tapes are arranged on the fourth side 202D rather than on the third side 202C as the first and second adhesive tapes 210, 212. To do so, the electrode assembly 200 may for example be rotated in the apparatus 300, e.g., such that the fourth side 202D is adjacent to the holding members 302A, 302B and the rollers 302B, 304B. Alternatively, the apparatus 300 may also be provided with a third holding member, a fourth holding member, a third moveable roller and a fourth moveable roller for arranging the third and fourth adhesive tapes on the electrode stack 202. The additional pairs may for example be arranged as described below with reference to FIG. 4a.

The method 100 may further comprise arranging (e.g., integrating) the electrode assembly 200 in a battery. An example for this is shown in FIG. 4a and 4b, which show schematic illustrations of a battery 400 in top view (along the stacking direction) and side view, respectively. The battery 400 comprises a housing 402 in which the electrode assembly 200 with the electrode stack 202 (which may be embodied and manufactured as described above with reference to FIG. 2 and 3a to 3d) is arranged. The battery 400 may further comprise a pair of contacts or electrode leads 404, which may for example be connected to the first electrode sheets and the second electrode sheets, respectively, of each of the monocells 208 in the electrode stack 202.

The battery 400 may be a secondary battery cell, for example a pouch-type secondary battery cell as illustrated in FIG. 4a and 4b. The housing 402 of the pouch-type battery cell may comprise two matching halves (e.g., a bottom half and an upper half as seen in FIG. 4b) between which the electrode assembly 200 is arranged (e.g., accommodated in a recess in one or both of the halves. The housing 402 (e.g., the two halves) may for example be made of a flexible material such as a thin sheet or foil. To seal the housing 402, the two halves may be attached (e.g., glued and/or welded) to each other along a circumference of the housing 402 surrounding the electrode assembly 200. An electrolyte may be injected between the two halves to impregnate the separator sheets 206 in the electrode stack 202 with the electrolyte.

In the example of FIG. 4a and 4b, a plurality of pairs 211 of a first adhesive tape and a second adhesive tape (not shown individually in FIG. 4a and 4b) are arranged along the third side 202C of the electrode stack 202 in the length direction (y-direction). Each of the pairs 211 may be formed as described above and illustrated in FIG. 3a to 3d. The pairs 211 may for example be arranged equidistantly (i.e., with uniform spacing) along the third side 202C. The number of pairs 211 may be chosen so as to sufficiently secure the electrode stack 202 and may for example be between two and ten, e.g. three or four as shown in FIG. 4a.

Furthermore, a plurality of pairs 213 of a third adhesive tape and a fourth adhesive tape (not shown individually in FIG. 4a and 4b) are arranged along the fourth side 202D of the electrode stack 202 in the length direction (y-direction). Each of the pairs 213 may be formed as described above and illustrated in FIG. 3a to 3d (with the tapes being arranged on the fourth side 202D instead of the third side 202C). Each of the pairs 213 may be aligned with a respective one of the pairs 211. The pairs 213 may for example be arranged equidistantly (i.e., with uniform spacing) along the fourth side 202D. The number of pairs 213 may be chosen so as to sufficiently secure the electrode stack 202 and may for example be between two and ten, e.g. three or four as shown in FIG. 4a. The number of pairs 211 and the number of pairs 213 may be the same.

The examples of the present invention disclosed herein only constitute specific examples for illustration purposes. The present invention can be implemented in various ways and with many modifications without altering the underlying basic properties. Therefore, the claimed invention is only defined by the claims as stated below.

## Claims

1. A method (100) for manufacturing an electrode assembly (200) for use in a battery (400), the method (100) comprising:
receiving an electrode stack (202) comprising a plurality of electrode sheets (204) stacked in a stacking direction (z), the electrode stack (202) having a first side (202A), a second side (202B) opposite to the first side (202A) and a third side (202C) extending between the first and second sides (202A, 202B), the first and second sides (202A, 202B) extending perpendicular or substantially perpendicular to the stacking direction (z);
arranging a first adhesive tape (210) on the first and third sides (202A, 202C) of the electrode stack (202) such that the first adhesive tape (210) covers the first side (202A) at least in part and a portion of the third side (202C) abutting the first side (202A);
arranging a second adhesive tape (212) on the second and third sides (202B, 202C) of the electrode stack (202) such that the second adhesive tape (212) covers the second side (202B) at least in part and a portion of the third side (202C) abutting the second side (202B); and
attaching the first adhesive tape (210) and the second adhesive tape (212) to each other for securing the electrode sheets (204) in the electrode stack (202).

2. The method (100) of claim 1, wherein:
the first adhesive tape (210) is arranged on the first and third sides (202A, 202C) of the electrode stack (202) by arranging the first adhesive tape (210) on the first side (202A) of the electrode stack (202) such that a first portion (210A) of the first adhesive tape (210) covers the first side (202A) of the electrode stack (202) at least in part and a second portion (210B) of the first adhesive tape (210) extends beyond a first edge of the electrode stack (202) at which the third side (202C) of the electrode stack (202) abuts the first side (202A) of the electrode stack (202), and folding the first adhesive tape (210) around the first edge of the electrode stack (202) to arrange at least a first part (210B-I) of the second portion (210B) of the first adhesive tape (210) on the third side (202C) of the electrode stack (202); and/or
the second adhesive tape (212) is arranged on the second and third sides (202B, 202C) of the electrode stack (202) by arranging the second adhesive tape (212) on the second side (202B) of the electrode stack (202) such that a first portion (212A) of the second adhesive tape (212) covers the second side (202B) of the electrode stack (202) at least in part and a second portion (212B) of the second adhesive tape (212) extends beyond a second edge of the electrode stack (202) at which the third side (202C) of the electrode stack (202) abuts the second side (202B) of the electrode stack (202), and folding the second adhesive tape (212) around the second edge of the electrode stack (202) to arrange at least a first part (212B-I) of the second portion (212B) of the second adhesive tape (212) on the third side (202C) of the electrode stack (202).

3. The method (100) of claim 2, wherein the first adhesive tape (210) and the second adhesive tape (212) are attached to each other by attaching a second part (210B-II) of the second portion (210B) of the first adhesive tape (210) and a second part (212B-II) of the second portion (212B) of the second adhesive tape (212) to each other, in particular wherein the second part (212B-II) of the second portion (212B) of the second adhesive tape (212) is longer than the second part (210B-II) of the second portion (210B) of the first adhesive tape (210) and the method (100) further comprises arranging the second part (212B-II) of the second portion (212B) of the second adhesive tape (212) on the first adhesive tape (210) and/or on the first side (202A) of the electrode stack (202).

4. The method (100) of claim 2 or 3 wherein:
the first adhesive tape (210) is folded around the first edge of the electrode stack (202) using a first moveable roller (302A) that is moved along the third side (202C) of the electrode stack (202) to arrange the first adhesive tape (210) thereon; and/or
the second adhesive tape (212) is folded around the second edge of the electrode stack (202) using a second moveable roller (304B) that is moved along the third side (202C) of the electrode stack (202) to arrange the second adhesive tape (212) thereon, the first and second moveable rollers (304A, 304B) being moved in opposite directions.

5. The method (100) of claim 3 and 4, wherein the second part (210B-II) of the second portion (210B) of the first adhesive tape (210) and the second part (212B-II) of the second portion (212B) of the second adhesive tape (212) are attached to each other using the first and second rollers (302A, 302B),
in particular wherein the second part (210B-II) of the second portion (210B) of the first adhesive tape (210) and the second part (212B-II) of the second portion (212B) of the second adhesive tape (212) are attached to each other by pressing the second part (212B-II) of the second portion (212B) of the second adhesive tape (212) against the second part (210B-II) of the second portion (210B) of the first adhesive tape (210) with the second roller (304B) while moving the first roller (302B) away from the electrode stack (202) on the second part (210B-II) of the second portion (210B) of the first adhesive tape (210), in particular wherein the second part (212B-II) of the second portion (212B) of the second adhesive tape (212) is arranged on the first adhesive tape (210) and/or on the first side (202A) of the electrode stack (202) by moving the second roller (304B) along the third side (202C) of the electrode stack (202) and, optionally, along the first side (202A) of the electrode stack (202).

6. The method (100) of any one of the preceding claims, wherein arranging the first adhesive tape (210) on the first side (202A) of the electrode stack (202) comprises holding the first adhesive tape (210) using a first holding member (302A), preferably by suction, and pressing the first adhesive tape (210) against the first side (202A) of the electrode stack (202) with the first holding member (302A) and wherein arranging the second adhesive tape (212) on the second side (202B) of electrode stack (202) comprises holding the second adhesive tape (212) using a second holding member (304A), preferably by suction, and pressing the second adhesive tape (212) against the second side (202B) of the electrode stack (202) with the second holding member (304A),
in particular wherein:
the first adhesive tape (210) is pressed against the first side (202A) of the electrode stack (202) with the first holding member (302A) while folding the first adhesive tape (210) around the first edge, attaching the first adhesive tape (210) and the second adhesive tape (212) to each other, and/or arranging the second part (212B-II) of the second portion (212B) of the second adhesive tape (212) on the first adhesive tape (210); and/or
the second adhesive tape (212) is pressed against the second side (202B) of the electrode stack (202) with the second holding member (304A) while folding the second adhesive tape (212) around the second edge, attaching the first adhesive tape (210) and the second adhesive tape (212) to each other, arranging the second part (212B-II) of the second portion (212B) of the second adhesive tape (212) on the first adhesive tape (210) and/or arranging the second part (212B-II) of the second portion (212B) of the second adhesive tape (212) on the first side (202A) of the electrode stack (202).

7. The method (100) of claim 5 and 6, wherein arranging the second part (212B-II) of the second portion (212B) of the second adhesive tape (212) on the first adhesive tape (210) and/or on the first side (202A) of the electrode stack (202) comprises releasing the first adhesive tape (210) from the first holding member (302A), moving the first holding member (302A) away from the first side (202A) of the electrode stack (202) and arranging the second part (212B-II) of the second portion (212B) of the second adhesive tape (212) on the first portion (210A) of the first adhesive tape (210) and/or on the first side (202A) of the electrode stack (202) by moving the second roller (304b) along the first side (202A) of the electrode stack (202).

8. The method (100) of any one of the preceding claims, wherein the method (100) comprises:
arranging a third adhesive tape on the first side (202A) and a fourth side (202D-F) of the electrode stack (202), the fourth side (202D-F) extending between the first and second sides (202A, 202B) of the electrode stack (202) and being different from, in particular opposite to the third side (202C), the third adhesive tape being arranged such that the third adhesive tape covers the first side (202A) at least in part and a portion of the fourth side (202D-F) abutting the first side (202A);
arranging a fourth adhesive tape on the second and fourth sides (202B, 202D-F) of electrode stack (202) such that the fourth adhesive tape covers the second side (202B) at least in part and a portion of the fourth side (202D-F) abutting the second side (202B); and
attaching the third adhesive tape and the fourth adhesive tape to each other for securing the electrode sheets (204) in the electrode stack (202).

9. An apparatus (300) for manufacturing an electrode assembly (200) for use in a battery (400), wherein:
the apparatus (300) is configured to receive an electrode stack (202) comprising a plurality of electrode sheets (204) stacked in a stacking direction (z), the electrode stack (202) having a first side (202A), a second side (202B) opposite to the first side (202A) and a third side (202C) extending between the first and
second sides (202A, 202B), the first and second sides (202A, 202B) extending perpendicular or substantially perpendicular to the stacking direction (z); and
the apparatus (300) comprises a taping assembly (302A/B, 304A/B) for securing the electrode sheets (204) in the electrode stack (202) by applying adhesive tapes (210, 212) thereto,
wherein the taping assembly (302A/B, 304A/B) is configured to:
arrange a first adhesive tape (210) on the first and third sides (202A, 202C) of the electrode stack (202) such that the first adhesive tape (210) covers the first side (202A) at least in part and a portion of the third side (202C) abutting the first side (202A);
arrange a second adhesive tape (212) on the second and third sides (202B, 202C) of the electrode stack (202) such that the second adhesive tape (212) covers the second side (202B) at least in part and a portion of the third side (202C) abutting the second side (202B); and
attach the first adhesive tape (210) and the second adhesive tape (212) to each other for securing the electrode sheets (204) in the electrode stack (202).

10. The apparatus (300) of claim 9, wherein the taping assembly (302A/B, 304A/B) comprises:
a first moveable roller (302B) configured to be moved along the third side (202C) of the electrode stack (202) for folding the first adhesive tape (210) around a first edge of the electrode stack (202) at which the third side (202C) of the electrode stack (202) abuts the first side (202A) of the electrode stack (202) to arrange the first adhesive tape (210) on the third side (202C) of the electrode stack (202); and/or
a second moveable roller (304B) configured to be moved along the third side (202C) of the electrode stack (202) for folding the second adhesive tape (212) around a second edge of the electrode stack (202) at which the third side (202C) of the electrode stack (202) abuts the second side (202B) of the electrode stack (202) to arrange the second adhesive tape (212) on the third side (202C) of the electrode stack (202); and/or
a first holding member (302A) configured to hold the first adhesive tape (210), preferably by suction, and press the first adhesive tape (210) against the first side (202A) of the electrode stack (202); and/or
a second holding member (304A) configured to hold the second adhesive tape (212), preferably by suction, and press the second adhesive tape (212) against the second side (202B) of the electrode stack (202).

11. The apparatus (300) of claim 9 or 10, wherein the apparatus (300) is configured to arrange the first and second adhesive tapes (210, 212) on the electrode stack (202) by executing a method (100) according to any one of claims 1 to 8.

12. An electrode assembly (200) for use in a battery (400), the electrode assembly (200) comprising:
an electrode stack (202) comprising a plurality of electrode sheets (204) stacked in a stacking direction (z), the electrode stack (202) having a first side (202A), a second side (202B) opposite to the first side (202A) and a third side (202C) extending between the first and second sides (202A, 202B), the first and second sides (202A, 202B) extending perpendicular or substantially perpendicular to the stacking direction (z);
a first adhesive tape (210) arranged on the first and third sides (202A, 202C) of electrode stack (202) such that the first adhesive tape (210) covers the first side (202A) at least in part and a portion of the third side (202C) abutting the first side (202A); and
a second adhesive tape (212) arranged on the second and third sides (202B, 202C) of electrode stack (202) such that the second adhesive tape (212) covers the second side (202B) at least in part and a portion of the third side (202C) abutting the second side (202B), wherein the first and second adhesive tapes (210, 212) are attached to each other for securing the electrode sheets (204) in the electrode stack (202).

13. The electrode assembly (200) of claim 12, wherein the portion (210B) of the first adhesive tape (210) that is attached to the second adhesive tape (212) is folded over and arranged at the third side (202C) and, optionally, the first side (202A) of the electrode stack (202),
in particular wherein the first adhesive tape (210) has a first surface facing the first and third sides (202A, 202C) of the electrode stack (202) and a second surface facing away from the first and third sides (202A, 202C) of the electrode stack (202) and wherein the second adhesive tape (212) is attached to the first surface of the first adhesive tape (210) in the folded-over portion (210B) of the first adhesive tape (210) and to the second surface of the first adhesive tape (210) in a portion (210A) of the first adhesive tape (210) arranged on one or both of the first and third sides (202A, 202C) of the electrode stack (202).

14. The electrode assembly (200) of claim 12 or 13, wherein:
the second adhesive tape (212) completely covers the first adhesive tape (210); and/or
a part (212B-II) of the second adhesive tape (212) is directly attached to the first side (202A) of the electrode stack (202) without the first adhesive tape (210) being arranged therebetween; and/or
the electrode assembly (200) comprises a plurality of first adhesive tapes (210) and a plurality of second adhesive tapes (212), each of the first adhesive tapes (210) covering the first side (202A) at least in part and a respective portion of the third side (202C) abutting the first side (202A), each of the second adhesive tapes (212) covering the second side (202B) at least in part and a respective portion of the third side (202C) abutting the second side (202B), and each of the first adhesive tapes (210) being attached to a respective one of the second adhesive tapes (212) for securing the electrode sheets (204) in the electrode stack (202).

15. A battery (400) comprising an electrode assembly (200) according to any one of claims 12 to 14, in particular wherein the battery (400) is or comprises a pouch-type secondary battery cell.
